(19) Europäisches Patentamt
European Patent Office
Office européen des brevets

(11) Veröffentlichungsnummer: **0 281 892**
**B1**

(12) # EUROPÄISCHE PATENTSCHRIFT

(45) Veröffentlichungstag der Patentschrift: **19.09.90**

(51) Int. Cl.5: **C09B 62/51**, C09B 62/028, D06P 1/38

(21) Anmeldenummer: **88103028.2**

(22) Anmeldetag: **01.03.88**

(54) **Reaktivfarbstoffe.**

(30) Priorität: **10.03.87 DE 3707550**

(43) Veröffentlichungstag der Anmeldung:
**14.09.88 Patentblatt 88/37**

(45) Bekanntmachung des Hinweises auf die Patenterteilung:
**19.09.90 Patentblatt 90/38**

(84) Benannte Vertragsstaaten:
**CH DE FR GB LI**

(56) Entgegenhaltungen:
**EP-A- 0 169 457**

(73) Patentinhaber: **BAYER AG,**
**D-5090 Leverkusen 1 Bayerwerk(DE)**

(72) Erfinder: **Herd, Karl-Josef, Dr., Am Gartenfeld 66,**
**D-5068 Odenthal(DE)**

EP 0 281 892 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Reaktivfarbstoffe der Formel

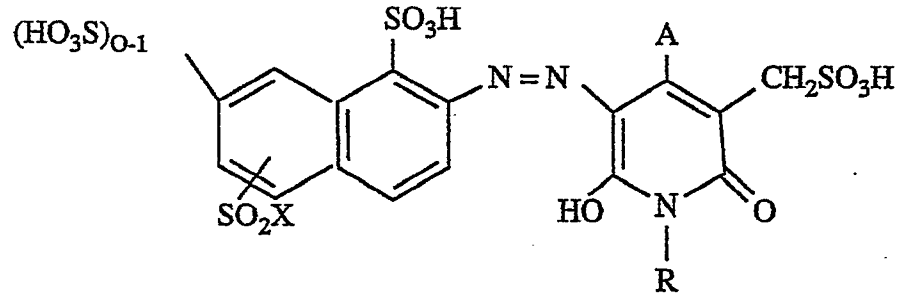

(1)

worin

A = H,ggf. durch -Cl,-OH,-OC$_1$–C$_4$-Alkyl,-SO$_3$H,-OSO$_3$H, -COOH oder -NR″Z substituiertes C$_1$–C$_4$-Alkyl; ggf. durch Cl,SO$_3$H, OC$_1$–C$_4$-Alkyl, Cl–C$_4$-Alkyl oder COOH substituiertes Phenyl oder -COOR′

worin

R′ = H,ggf. durch -Cl, -OH, OC$_1$–C$_4$-Alkyl, -SO$_3$H, -OSO$_3$H, COOH substituiertes C$_1$–C$_4$-Alkyl

R″ = H,ggf. durch OH,SO$_3$H, COOH oder OSO$_3$H substituiertes C$_1$–C$_4$-Alkyl

X = -CH=CH$_2$ oder -CH$_2$CH$_2$-Y

Z = heterocyclischer faserreaktiver Rest oder Acylrest

Y = alkalisch eliminierbarer Rest

R = ggf. durch Cl, OH, OC$_1$–C$_4$-Alkyl, SO$_3$H,OSO$_3$H, COOH oder -NR″Z substituiertes C$_1$–C$_4$-Alkyl; ggf. durch Cl, SO$_3$H, OC$_1$–C$_4$-Alkyl, C$_1$–C$_4$-Alkyl oder COOH substituiertes Phenyl oder ggf. durch Cl, SO$_3$H, OC$_1$–C$_4$-Alkyl oder COOH substituiertes Phenyl-C$_1$–C$_4$-Alkyl.

Geeignete heterocyclische faserreaktive Reste sind insbes. solche der Triazin- oder Pyrimidin-Reihe, geeignete Acylreste sind insbes. C$_1$–C$_4$-Alkylcarbonyl, C$_1$–C$_4$-Alkylsulfonyl, ggf. durch Cl, SO$_3$H, OC$_1$–C$_4$-Alkyl oder COOH substituiertes Phenylcarbonyl oder Phenylsulfonyl. Geeignete Reste Y sind bspw. -OSO$_3$H, -SSO$_3$H, -OCOCH$_3$, -OPO$_3$H$_2$, -OSO$_2$CH$_3$, -SCN, -NHSO$_2$CH$_3$, -Cl, -Br -F, -N(C$_1$–C$_4$-Alkyl)$_2$, -OCO$_6$H$_5$, -OSO$_2$-C$_6$H$_4$-CH$_3$, -N(C$_1$–C$_4$-Alkyl)$_3^+$ Cl$^-$; -N(C$_1$–C$_4$-Alkyl)$_3^+$ SO$_4^{2-}$.

Geeignete mit faserreaktiven Resten substituierte Reste R sind beispielsweise

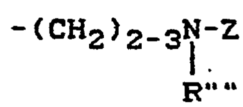 mit

R″″ = H, C$_1$-C$_4$-Alkyl, gegebenenfalls substituiert durch OH, COOH, SO$_3$H, OSO$_3$H.

Geeignete heterocyclische faserreaktive Reste sind in großer Zahl in der Literatur beschrieben. Beispielhaft seien erwähnt:

2,4-Dichlortriazinyl-6-, Monohalogen-sym.-triazinylreste, insbesondere Monochlor- und Monofluortriazinylreste, die durch Amino, Monoalkylamino, Dialkylamino, Arylamino, Aralkylamino, Alkoxy, Aryloxy substituiert sind, wobei Aryl vorzugsweise gegebenenfalls substituiertes Phenyl oder Naphthyl bedeutet und Alkyl gegebenenfalls substituiertes C$_1$-C$_4$-Alkyl bedeutet und wobei bevorzugte Substituenten Carboxy, Sulfo oder Sulfato sind.

Mono-, Di- oder Trihalogenpyrimidinylreste, wie 2,4-Dichlorpyrimidinyl-6, 2,4,5-Trichlorpyrimidinyl-6, 2,6-Dichlorpyrimidinyl-4-carbonyl, 2,5-Dichlorpyrimidinyl-5-carbonyl, 2-Fluor-4-pyrimidinyl, 2,6-Difluor-5-methyl-4-pyrimidinyl, 2,6-Difluor-5-chlor-4-pyrimidinyl-, 2-Fluor-6-methyl-5-chlor-4-pyrimidinyl, 2,5,6-Trifluor-4-pyrimidinyl, 5-Chlor-6-chlormethyl-2-fluor-4-pyrimidinyl, 5-chlor-6-dichlormethyl-2-fluor-4-pyrimidinyl, 5-Chlor-6-trichloromethyl-2-fluor-4-pyrimidinyl, 5-Chlor-2-trichlormethyl-6-fluor-4-pyrimidinyl, 5-Chlor-2-fluordichlormethyl-6-fluor-4-pyrimidinyl, 2-Fluor-5-chlor-4-pyrimidinyl, 2-Fluor-6-phenyl-4-pyrimidinyl, 6-Fluor-5-chlor-2-methyl-4-pyrimidinyl sowie 2-Methylsulfonyl-6-methyl-4-pyrimidinyl.

Bevorzugte Farbstoffe sind solche der Formel

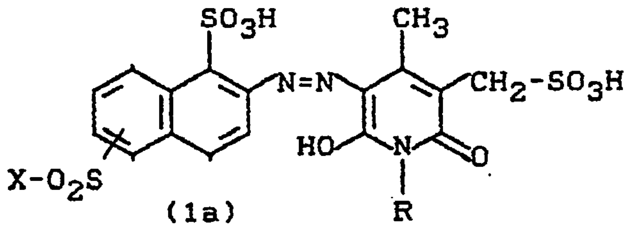

(1a)

worin X und R die unter Formel (1) genannte Bedeutung zukommt.

Bevorzugte Farbstoffe sind weiterhin solche mit dem Rest $-SO_2X$ in 6-Stellung, insbesondere solche der Formel

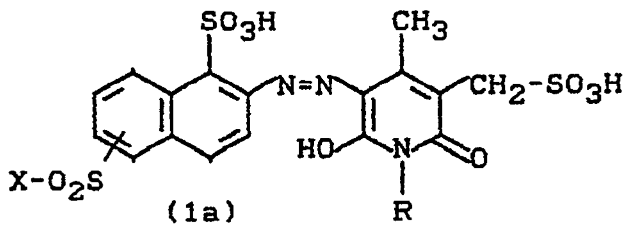

(1a)

worin $R''' = H$ oder $C_1$-$C_4$-Alkyl.

Besonders bevorzugt sind dabei Farbstoffe (2) mit $X = -CH_2CH_2OSO_3H$ und $R''' = CH_3$ oder $C_2H_5$.

Die angegebenen Formeln sind die der freien Säuren. Bei der Herstellung werden im allgemeinen die Salze erhalten, insbesondere die Alkalisalze wie Natrium-, Kalium- oder Lithiumsalze, die auch zum Färben eingesetzt werden.

Die neuen Farbstoffe eignen sich in hervorragender Weise zum Färben und Bedrucken von textilen Gebilden aus nativer und regenerierter Cellulose sowie von natürlichen oder synthetischen Polyamiden nach den für Vinylsulfonfarbstoffen üblichen Verfahren.

Die mit diesen Farbstoffen in hohen Ausbeuten erhältlichen brillanten Gelbfärbungen zeichnen sich durch eine hohe Faser-Farbstoff-Bindungsstabilität aus; es werden hervorragend naßechte Färbungen erhalten. Besonders auffällig sind die ausgesprochen hohen Oxidationsechtheiten dieser Färbungen.

Das Verfahren zur Herstellung der Farbstoffe der Formel (1) ist dadurch gekennzeichnet, daß man Aminoverbindungen (3) diazotiert

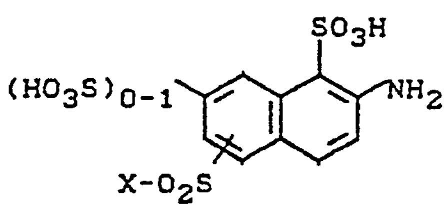 (3) 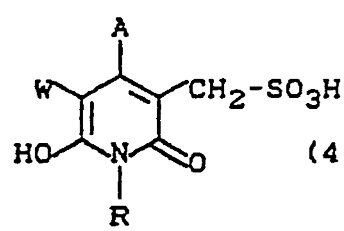 (4)

und in an sich bekannter Weise auf die bekannten Pyridonverbindungen (4) kuppelt, wobei W für Wasserstoff oder $-CONH_2$ steht. Im Falle von $W = -CONH_2$ erfolgt die Kupplung unter Austritt des Aminocarbonylrestes, wie es beispielsweise in der Deutschen Offenlegungsschrift 2 162 612 ausführlich beschrieben ist.

Ein weiteres Verfahren zur Herstellung der Farbstoffe (1) besteht darin, daß man in Farbstoffen der Formel

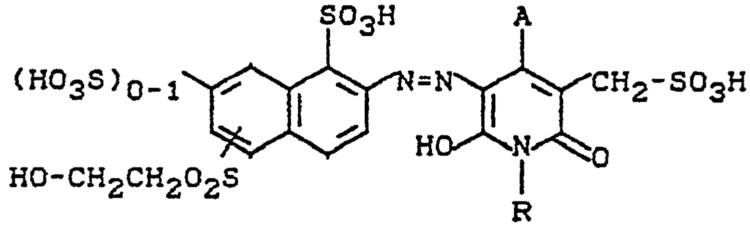

die Gruppe $-SO_2CH_2CH_2OH$ verestert bzw. acyliert, insbesondere durch Behandlung mit Schwefelsäure-monohydrat oder Oleum bei 0-30°C in die Gruppe $-SO_2CH_2CH_2OSO_3H$ überführt.

In der EP A 0169 457 werden Pyrodinn-azofarbestoffe beschrieben, die sich von den erfindungsgemäßen Farbstoffen dadurch unterscheiden, daß sie in 3-Stellung im Pyridonrest keinen oder einen Carbomoylsubstituenten aufweisen.

Beispiel 1

82, 2 g 6-(b-Sulfatoethylsuflonyl)-1-sulfo-2-naphthylamin werden in 600 ml Wasser suspendiert, mit 200 g Eis und 60 ml einer ca. 30 %ige wäßrigen Salzsäure versetzt und mit einer 5N-Natriumnitritlösung rasch diazotiert. Nach einer Stunde Rühren bei 10–15°C wird die überschüssige Salpetrige Säure mit Amidosulfonsäure entfernt. Zum Reaktionsgemisch, fügt man dann 55, 2 g 3-Aminocarbonyl-1, 4-dimethyl-5-sulfomethyl-6-hydroxy-2-pyridon und stellt den pH der Reaktionsmischung langsam mit 20 %iger Kaliumhydrogencarbonatlösung auf 7, 0. Man rührt 30 Minuten nach, wobei man den pH konstant bei 7, 0 hält. (Anstelle der 55, 2 g Pyridon kann auch die entsprechende Pyridon-Reaktionslösung, die man durch Umsetzung von 36, 6 g 3-Aminocarbonyl-1,4-dimethyl-6-hydroxy-2-pyridon mit der äquimolaren Menge Hydroxymethansulfonsäurelosung bei 60°C/pH 7 erhält, eingesetzt werden). Die gelbe Kupplungslösung wird mit 100 g Kaliumchlorid ausgesalzen, und der ausgefallene Kristalline Farbstoff durch Absaugen isoliert.

Nach dem Trocknen bei 70°C im Vakuum erhält man ca. 145 g eines KCl-haltigen gelben Farbstoffpulvers der Formel

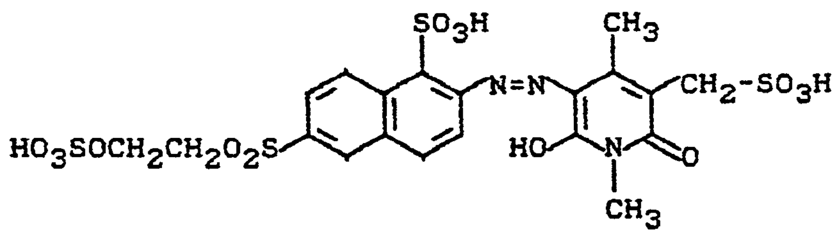

das Baumwolle sowohl im Ausziehverfahren wie auch im Klotzkaltverweil-Verfahren in einem brillanten grünstichig gelben Farbton färbt ($\lambda_{max}$ ($H_2O$) = 428 nm).

Ganz analog erhält man bei Verwendung der entsprechenden Kupplungskomponenten die folgenden brillanten Gelbfarbstoffe.

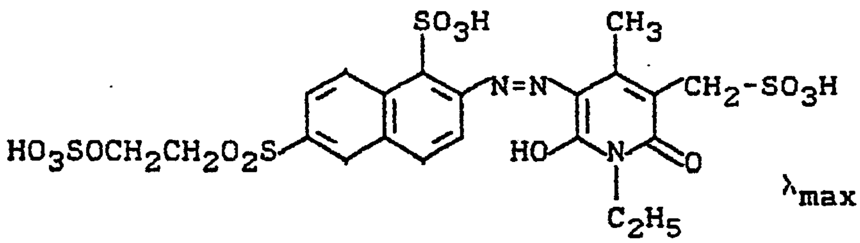

$\lambda_{max}$ = 428 nm

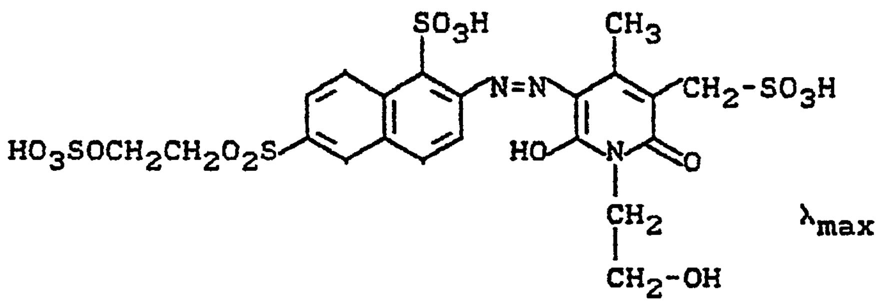

$\lambda_{max}$ = 430 nm

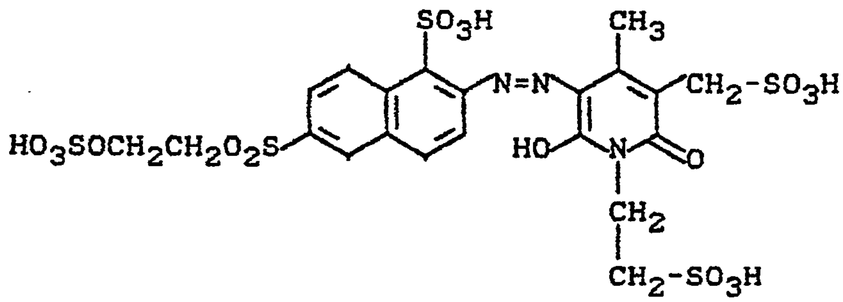

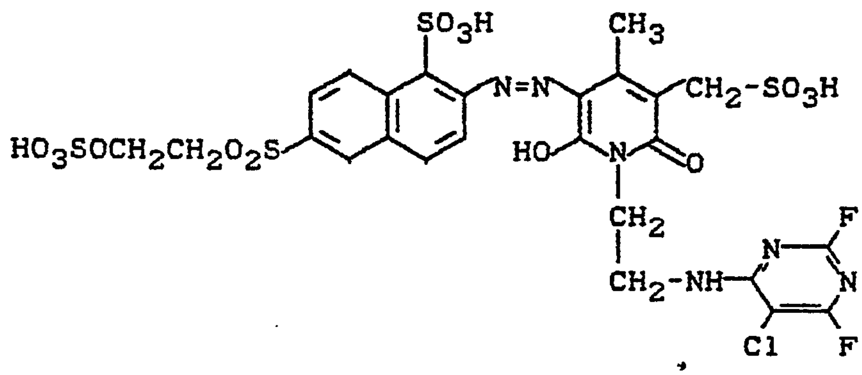

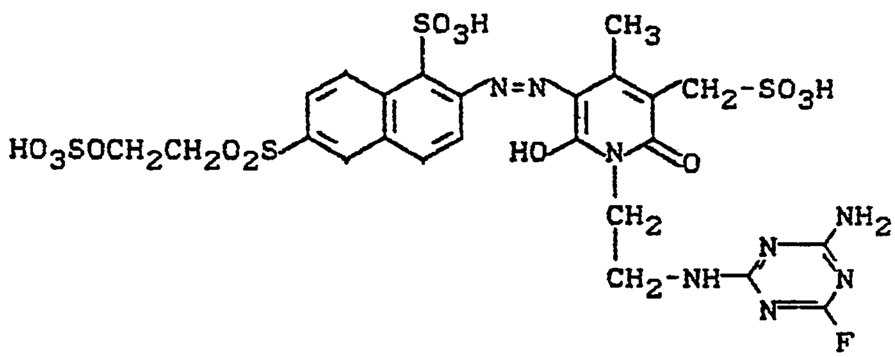

Beispiel 2

Arbeitet man wie in Beispiel 1 angegeben unter Verwendung von 5-(β-Sulfatoethylsulfonyl)-1-sulfo-2-naphthylamin als Diazokomponente, so gelangt man zu folgendem Gelbfarbstoff:

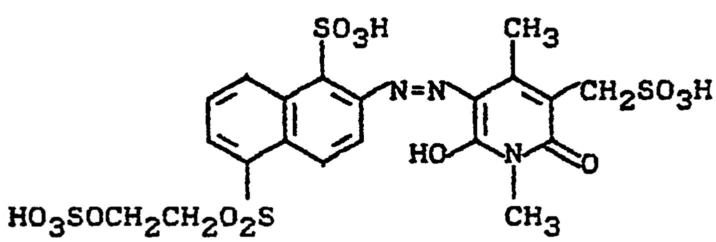

Beispiel 3

62 g des Azofarbstoffs der Formel

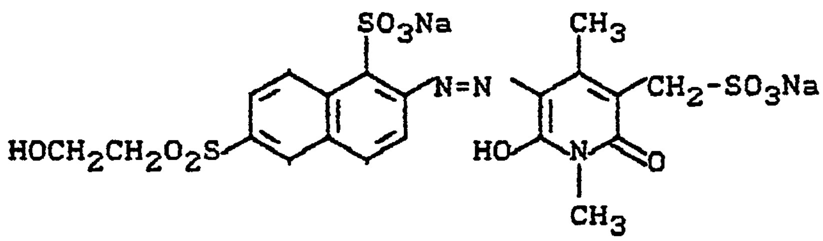

den man durch Diazotieren und Kuppeln von 6-(β-Hydroxyethylsulfonyl)-1-sulfo-2-naphthylamin auf 1,4-Dimethyl-3-sulfomethyl-6-hydroxy-2-pyridon erhält, werden unter Außenkühlung in 100 ml Schwefelsäuremonohydrat portionsweise eingetragen. Man rührt 2 Stunden bei Raumtemperatur und trägt dann die Reaktionsmischung auf 200 g Eis/100 ml Wasser aus. Der ausgefallene Farbstoff wird abgesaugt, der Farbstoff in 200 ml Wasser suspendiert und der pH der Mischung mit festen Na-Bicarbonat auf 5,0 eingestellt. Nach Zusatz von 20 g Natriumchlorid wird der Farbstoff isoliert. Er ist mit dem in Beispiel 1 beschriebenen Farbstoff identisch.

Beispiel 4

Setzt man analog Beispiel 3 den Farbstoff der Formel

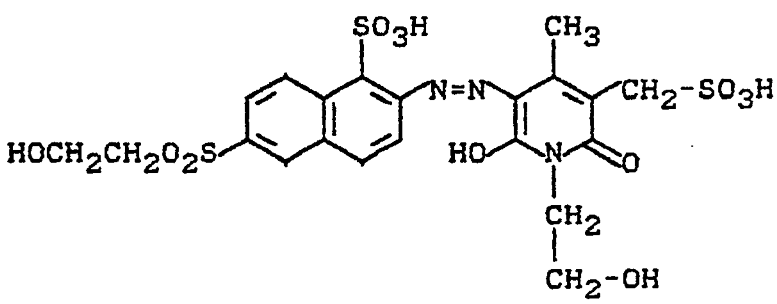

mit Schwefelsäuremonohydrat um, so erhält man den Farbstoff der Formel

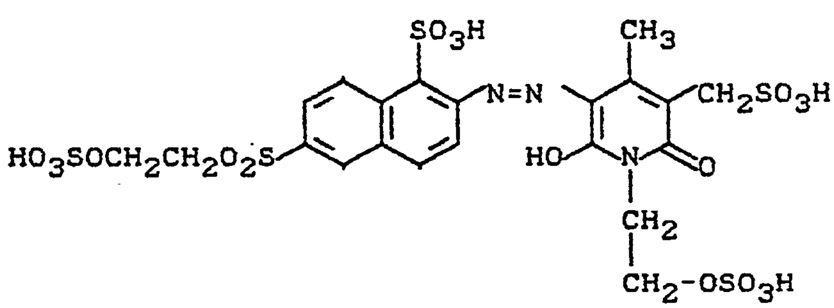

**Patentansprüche**

1. Farbstoffe der Formel

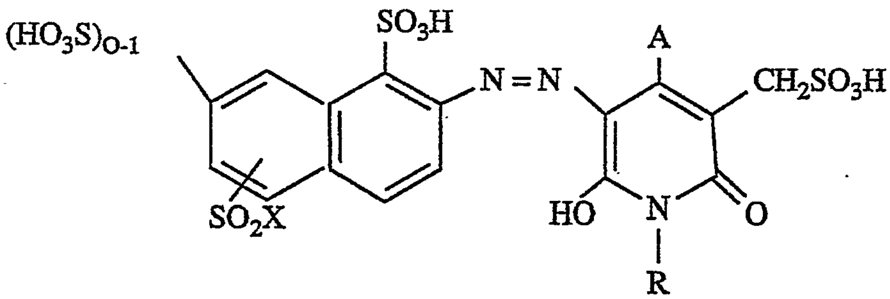

worin

A = H, ggf. durch -Cl, -OH, -OC$_1$–C$_4$-Alkyl, -SO$_3$H, -OSO$_3$H, -COOH oder- NR″Z substituiertes C$_1$–C$_4$-Alkyl; ggf. durch Cl, SO$_3$H, OC$_1$–C$_4$ -Alkyl, C$_1$–C$_4$-Alkyl oder COOH substituiertes Phenyl oder -COOR′,

worin

R′ = H, ggf. durch -Cl, -OH, -C$_1$–C$_4$-Alkyl, -SO$_3$H, -OSO$_3$H, -COOH substituiertes C$_1$–C$_4$-Alkyl

R″ =H, ggf. durch OH, SO$_3$H, COOH oder substituiertes C$_1$–C$_4$-Alkyl

X= -CH=CH$_2$ oder -CH$_2$CH$_2$-Y

Z = heterocyclischer faserreaktiver Rest oder Acylrest

Y = alkalisch eliminierbarer Rest

R = H, ggf. durch Cl, OH, OC$_1$–C$_4$-Alkyl, SO$_3$H, OSO$_3$H, COOH oder-NR″Z substituiertes C$_1$–C$_4$-Alkyl; ggf. durch Cl, SO$_3$H, OC$_1$–C$_4$-Alkyl, C$_1$–C$_4$-Alkyl oder COOH substituiertes Phenyl oder ggf. durch Cl, SO$_3$H, OC$_1$–C$_4$-Alkyl oder COOH substituiertes Phenyl-C$_1$–C$_4$-Alkyl.

2. Farbstoffe des Anspruchs 1 mit X = -CH$_2$CH$_2$OSO$_3$H.

3. Farbstoffe der Formel

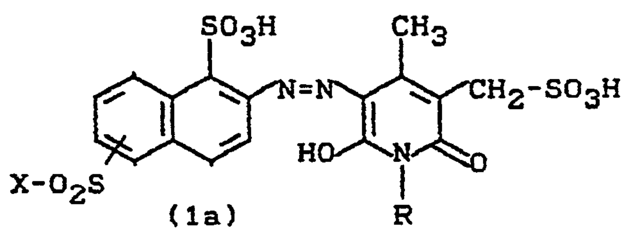

(1a)

worin

X und R die Bedeutung des Anspruchs 1 haben,

4. Farbstoffe de5 Anspruchs 3 mit Rest -S0$_2$X in 6-Stellung.

5. Farbstoffe der Ansprüche 1–4 mit R=H oder C$_1$–C$_4$-Alkyl.

6. Verwendung der Farbstoffe der Ansprüche 1–5 zum Färben und Bedrucken von Textilmaterialien aus Cellulose oder Polyamid.

7. Mit den Farbstoffen der Ansprüche 1–5 gefärbte oder bedruckte Textilmaterialien aus Cellulose oder Polyamid.

## Claims

1. Dyestuffs of the formula

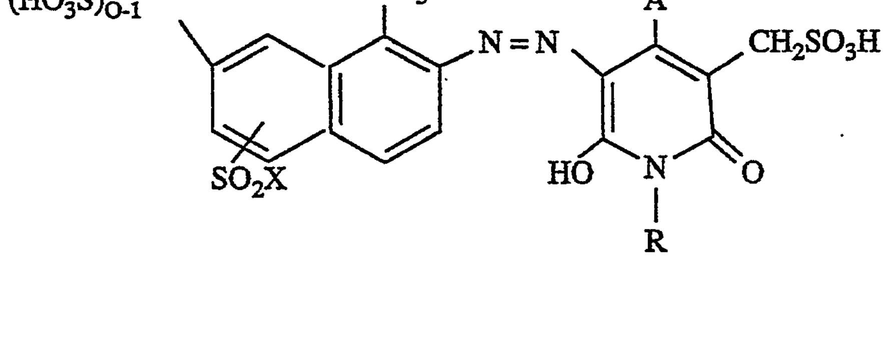

wherein

A = H, $C_1$–$C_4$-alkyl which is optionally substituted by -Cl, -OH, -O$C_1$–$C_4$-alkyl, -$SO_3$H, -O$SO_3$H, -COOH or -NR "Z; phenyl or -COOR′, which is optionally substituted by Cl, $SO_3$H, O$C_1$–$C_4$-alkyl, $C_1$–$C_4$-alkyl or COOH

wherein

R′ = H, $C_1$–$C_4$-alkyl which is optionally substituted by -Cl, -OH, O$C_1$–$C_4$-alkyl, -$SO_3$H, -O$SO_3$H, COOH

R" = H, $C_1$–C4-alkyl which is optionally substituted by OH, $SO_3$H, COOH or O$SO_3$H

X = -CH=$CH_2$ or -$CH_2CH_2$-Y Z = a heterocyclic fibre-reactive radical or acyl radical

Y = a radical which can be eliminated under alkaline conditions

R = H, $C_1$–$C_4$-alkyl which is optionally substituted by Cl, OH, O$C_1$–$C_4$-alkyl, $SO_3$H, O$SO_3$H, COOH or -NR "Z; phenyl which is optionally substituted by Cl, $SO_3$H, O$C_1$–$C_4$-alkyl, $C_1$–$C_4$ alkyl or COOH or phenyl-$C_1$–$C_4$-alkyl which is optionally substituted by Cl, $SO_3$H, O$C_1$–$C_4$alkyl or COOH.

2. Dyestuffs of Claim 1, where X = -$CH_2CH_2OSO_3H$.

3. Dyestuffs of the formula

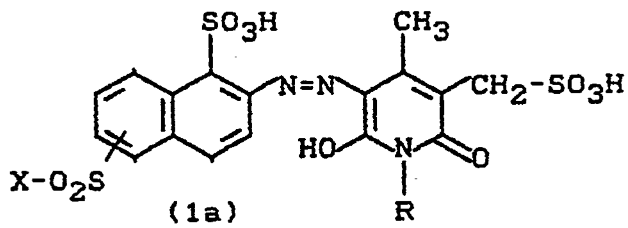

(1a)

wherein X and R have the meaning of Claim 1.

4. Dyestuffs of Claim 3 with the radical -$SO_2$X in the 6-position.

5. Dyestuffs of Claims 1–4, where R=H or $C_1$–$C_4$-alkyl.

6. Use of the dyestuffs of Claims 1–5 for dyeing and printing textile materials of cellulose or polyamide.

7. Textile materials of cellulose or polyamide dyed or printed with the dyestuffs of Claims 1–5.

**Revendications**

1. Colorants de formule

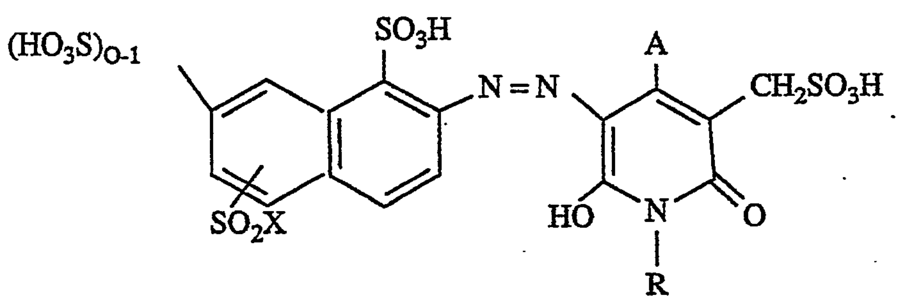

dans laquelle

A = H, alkyle en $C_1$–$C_4$, éventuellement substitué par –Cl, –OH, –O–alkyle en $C_1$–$C_4$, –$SO_3$H, –O$SO_3$H, –COOH ou –NR″Z; phényle éventuellement substitué par Cl, $SO_3$H, O-alkyle en $C_1$–$C_4$, alkyle en $C_1$–$C_4$ ou COOH; ou –COOR′;

dans lesquels

R′ = H, alkyle en $C_1$–$C_4$ éventuellement substitué par –Cl, –OH, O-alkyle en $C_1$–$C_4$, –$SO_3$H, –O$SO_3$H, COOH,

R″ = H, alkyle en $C_1$–$C_4$ éventuellement substitué par OH, $SO_3$H, COOH ou O$SO_3$H,

X = –CH=$CH_2$ ou –$CH_2CH_2$–Y,

Z = groupe hétérocyclique réactif avec les fibres ou groupe aryle,

Y = substituant éliminable en milieu alcalin,

R = H, alkyle en $C_1$–$C_4$ éventuellement substitué par Cl, OH, O-alkyle en $C_1$–$C_4$, $SO_3$H, O$SO_3$H, COOH ou –NR″Z; phényle éventuellement substitué par Cl, $SO_3$H, O-alkyle en $C_1$–$C_4$, alkyle en $C_1$–$C_4$ ou COOH; ou phényl-alkyle en $C_1$–$C_4$ éventuellement substitué par Cl, $SO_3$H, O-alkyle en $C_1$–$C_4$ ou COOH.

2. Colorants de la revendication 1 our lesquels
$X = -CH_2CH_2OSO_3H$.

3. Colorants de formule

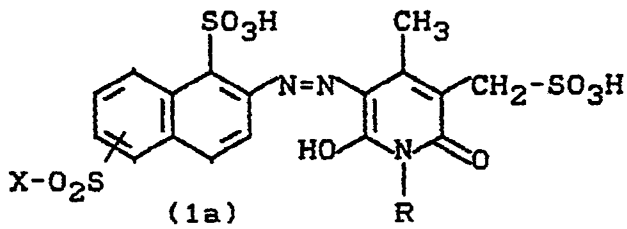

(1a)

dans laquelle X et R ont les significations indiquées dans la revendication 1.

4. Colorants de la revendication 3, portant le groupe $-SO_2X$ en position 6.

5. Colorants des revendications 1 à 4, pour lesquels R = H ou alkyle en $C_1$–$C_4$.

6. Utilisation des colorants des revendications 1 à 5, pour pour la teinture et l'impression de matières textiles en cellulose ou en polyamides.

7. Les matières textiles en cellulose ou en polyamides teintes ou imprimées par les colorants des revendications 1 à 5.